# EUROPEAN PATENT SPECIFICATION

(11) **EP 3 524 537 B1**
(45) Date of publication and mention of the grant of the patent: **28.08.2024**
(21) Application number: 17858313.4
(22) Date of filing: 29.09.2017
(51) Int. Cl.: B65D 25/14, B65D 1/34, B65D 25/34, B65D 65/42, D21H 19/20, D21H 19/84, D21H 27/10, D21J 3/00, B65D 81/34, B32B 23/08

(54) **MOLDED PULP CONTAINER AND MANUFACTURING METHOD FOR MOLDED PULP CONTAINER**
FASERFORMTEILBEHÄLTER UND HERSTELLUNGSVERFAHREN FÜR EINEN FASERFORMTEILBEHÄLTER
RÉCIPIENT EN PÂTE MOULÉE ET PROCÉDÉ DE FABRICATION DE RÉCIPIENT EN PÂTE MOULÉE

(30) Priority: 06.10.2016 JP 2016198055
(43) Date of publication of application: 14.08.2019
(73) Proprietor: Toyo Aluminium Ekco Products Co., Ltd., Osaka-shi, Osaka 550-0005 (JP)
(72) Inventor: SATO Kei, Osaka-shi Osaka 550-0005 (JP); HISANAGA Yoshiaki, Osaka-shi Osaka 550-0005 (JP)
(74) Representative: Grünecker Patent- und Rechtsanwälte PartG mbB
(86) International application number: PCT/JP2017/035508
(87) International publication number: WO 2018/066475

(56) References cited:
- WO-A1-98/22654
- DE-A1- 4 308 684
- JP-A- 2002 002 655
- JP-A- 2002 225 841
- JP-A- 2014 139 299
- JP-A- H11 171 238
- JP-A- H11 334 715
- KR-B1- 101 061 043
- US-A- 4 349 124
- US-A- 5 916 615
- US-A1- 2016 236 822

## Description

### TECHNICAL FIELD

The present invention relates to a molded pulp container, and to methods for manufacturing a molded pulp container, particularly to a molded pulp container including, on its inner and outer surfaces, a synthetic resin layer formed by coating its inner and outer surfaces with a synthetic resin, and a method for manufacturing the molded pulp container.

### BACKGROUND ART

Plastic containers each formed by molding a synthetic resin material into a predetermined shape, and paper containers each formed by bending a blank made of paperboard, and bonding it together with an adhesive are known as containers in which, e.g., food is received. Because such plastic and paper containers are lightweight, inexpensive, and disposable ones, they are widely used. However, it is impossible to dispose of plastic containers as burnable garbage. Also, it is difficult for paper containers to maintain its bonded state due to the heat of its contents.

In order to overcome such problems, molded pulp containers are also used which are formed by molding, as a raw material, wood pulp, or pulp obtained from reed or sugarcane, into a predetermined shape. Unlike plastic containers, it is possible to dispose of molded pulp containers as burnable garbage. Also, unlike paper containers, since molded pulp containers comprises an integral member which is not in the bonded state, there is no concern that the bonded parts of the molded pulp containers come unstuck.

Such a molded pulp container is inferior in water resistance to plastic containers. Also, when the surface of such a molded pulp container is rubbed, paper dust deriving from its raw material may occur. In order to overcome such problems, as disclosed in the below-identified Patent Document 1, as for a molded pulp container in which contents containing a lot of moisture, such as food, are received, generally a waterproof layer laminating thermoplastic films is formed on the inner surface of the molded pulp container. In order to form such a waterproof layer on the inner surface of a molded pulp container in this way, generally as in Patent Document 1, the molded pulp container is placed onto a mold in which a large number of sucking holes are formed; a thermoplastic film is supplied between the mold and a heater disposed above the mold; and the thermoplastic film heated by the heater is sucked toward, and welded to, the inner surface of the molded pulp container by the sucking forces of the sucking holes of the mold.

Though such a sucking method takes advantage of the air permeability which the molded pulp container itself has, when a waterproof layer is formed on the inner surface of the container, the air permeability of the container is lost. Therefore, if a waterproof layer is formed on the outer surface of the container as well so as to further increase the water resistance of the container and further reduce the occurrence of paper dust, it is impossible to use such a sucking method. Though it is possible to form a waterproof layer on the outer surface of the molded pulp container by another method, for example, by bonding a film thereto by hand, such a method requires a lot of time and increases manufacturing costs.

Instead of bonding films to the inner and outer surfaces of the molded pulp container, it is possible to apply a synthetic resin to the inner and outer surfaces of the molded pulp container. If this method is used, it is possible to simultaneously form a synthetic resin film on the inner and outer surfaces of the molded pulp container.

However, because a lot of moisture deriving from the manufacturing method of the container tends to remain in the molded pulp container to which a synthetic resin has not been applied yet, after a synthetic resin is applied to, and solidifies on, the inner and outer surfaces of the molded pulp container, while the molded pulp container is heated in a microwave oven with food received in the container, the moisture in the molded pulp container evaporates as water vapor, thereby forming air bubbles (so-called blisters) between the molded pulp container and the synthetic resin coating. This deteriorates the outer appearance of the molded pulp container. Even if, before a synthetic resin is applied to the molded pulp container, the molded pulp container is fully dried to remove moisture from the container, when the inner and outer surfaces of the molded pulp container are coated with, as a synthetic resin, a synthetic resin solution constituted by an aqueous solvent such as a synthetic resin emulsion, the moisture contained in the synthetic resin solution infiltrates into the container body. Since, after the synthetic resin solidifies in this state, a lot of moisture remains in the molded pulp container, while the molded pulp container is heated in a microwave oven with food received in the container, as in the above case, the moisture in the molded pulp container evaporates as water vapor, thereby forming blisters between the molded pulp container and the synthetic resin coating. This deteriorates the outer appearance of the molded pulp container.

For a molded pulp container in which food is received, and to which a top seal comprising a sealant film is attached along a flange at the upper portion of the side wall of the molded pulp container so as to seal the food, blisters formed on the flange of the molded pulp container when heated in a microwave oven could cause the top seal of the container to be opened in an unintended manner, as a result of which its contents may leak out of the container, and a user's hand may get burned by the leaked contents. In order to prevent the formation of such blisters, a method as disclosed in the below-identified Patent Document 2 is used, the method comprising making the moisture permeability of a layer formed on the inner surface of the molded pulp container differ from the moisture permeability of a layer formed on the outer surface of the molded pulp container. However, since it is necessary to make the thicknesses of the layers on the inner and outer surfaces of the molded pulp container differ from each other so as to realize the above difference in moisture permeability, such a method requires a lot of time and increases manufacturing costs.

### PRIOR ART DOCUMENTS

### PATENT DOCUMENTS

Patent document 1: Japanese Unexamined Patent Application Publication No. 2012-158160
Patent document 2: Japanese Unexamined Patent Application Publication No. 2001-114247

JP 2002 002655 A discloses a molded pulp container comprising:a container body made of molded pulp; and a synthetic resin layer formed by coating an inner surface and an outer surface of the container body; wherein at least one of the inner surface and the outer surface of the container body has at least one synthetic resin layer-free area which is free of the synthetic resin layer;wherein the container body includes at least a bottom; and a side wall extending upwardly from the bottom; wherein the side wall includes, at an upper end of the side wall, a substantially flat flange, and wherein the synthetic resin layer-free area is disposed on a portion of the flange.

### SUMMARY OF THE INVENTION

### PROBLEMS TO BE SOLVED BY THE INVENTION

It is an object of the present invention to overcome the above-described problems, namely, to provide, by a simple and easy method, a molded pulp container including a synthetic resin layer on both of its inner and outer surfaces, and configured such that the formation of blisters is reduced after the container is heated in a microwave oven, thereby keeping the outer appearance of the molded pulp container good.

### MEANS FOR SOLVING THE PROBLEMS

In order to achieve the above object, the present invention provides a molded pulp container according to independent claim 1. Preferred embodiments are laid down in dependent claims 2 and 3.

With the present invention, since moisture can evaporate through the synthetic resin layer-free area of the molded pulp container when heated, e.g., in a microwave oven, it is possible to reduce the formation of blisters on the portion of the molded pulp container on which the synthetic resin layer has been formed, thereby preventing the deterioration of the outer appearance of the molded pulp container.

In the molded pulp container of the present invention, the container body includes at least a bottom; and a side wall extending upwardly from the bottom, and synthetic resin layer-free area is disposed on a portion of the side wall. The molded pulp container having such a structure is suitable for receiving contents, and thus can be used for various purposes.

In the molded pulp container of the present invention, the side wall includes, at an upper end of the side wall, a substantially flat flange, and the synthetic resin layer-free area is disposed on a portion of the flange. With this arrangement, since moisture can evaporate through the synthetic resin layer-free area of the flange, it is possible to effectively evaporate the moisture of the flange through the synthetic resin layer-free area when the molded pulp container is heated, e.g., in a microwave oven.

In the molded pulp container of the present invention, the synthetic resin layer-free area may be disposed on an outer side surface of the flange. With this arrangement, since the synthetic resin layer-free area is disposed on the outer side surface of the flange, and moisture can evaporate through this outer side surface, when a top seal comprising a sealant film is attached to the container along the flange so as to seal the molded pulp container, the synthetic resin layer-free area does not affect the top seal, and the moisture of the flange can evaporate through the synthetic resin layer-free area when the molded pulp container is heated, e.g., in a microwave oven.

In the molded pulp container of the present invention, a surface area of the synthetic resin layer-free area is 1% or more and 10% or less, more preferably, 5 % or more and 10% or less of a surface area of the flange. With this arrangement, since most of the surface area of the flange is covered with the synthetic resin layer, it is possible to reduce the occurrence of paper dust.

In order to achieve the above object, the present invention also provides a method for manufacturing a molded pulp container according to any one of claims 1 to 3, the method comprising the steps of: preparing a container body forming member comprising a plurality of container body portions made of molded pulp and continuously connected together at least one continuously connecting portion; coating an inner surface and an outer surface of the container body forming member with a synthetic resin comprising a synthetic resin emulsion or a water-soluble resin in which an aqueous solvent can be used so as to form a synthetic resin layer on the inner surface and the outer surface of the container body forming member; and cutting, at the at least one continuously connecting portion, the container body forming member so as to separate the plurality of molded pulp container body portions from each other. Since the molded pulp containers manufactured by this method each includes at least one cut surface functioning as a synthetic resin layer-free area through which moisture can evaporate, it is possible to reduce the formation of blisters on the portion of the molded pulp container on which a synthetic resin layer has been formed by a simple and easy method, thereby preventing the deterioration of the outer appearance of the molded pulp container.

In order to achieve the above object, the present invention also provides a method for manufacturing a molded pulp container according to any one of claims 1 to 3, the method comprising the steps of: preparing a container body made of molded pulp; and forming a synthetic resin layer on an inner surface and an outer surface of the container body by coating the inner surface and the outer surface of the container body with a synthetic resin comprising a synthetic resin emulsion or a water-soluble resin in which an aqueous solvent can be used, wherein the step of forming the synthetic resin layer further comprises masking, with a masking element or elements, at least one portion of at least one of the inner surface and the outer surface of the container body so as to form a synthetic resin layer-free area which is free of the synthetic resin layer, on the at least one portion. Since at least a partial area of the inner and outer surfaces of the molded pulp container manufactured by this method functions as a synthetic resin layer-free area through which moisture can evaporate, it is possible to reduce the formation of blisters on the portion of the molded pulp container on which a synthetic resin layer has been formed by a simple and easy method, thereby preventing the deterioration of the outer appearance of the molded pulp container.

In order to achieve the above object, the present invention also provides a method for manufacturing a molded pulp container according to any one of claims 1 to 3, the method comprising the steps of: preparing a container body made of molded pulp; and forming a synthetic resin layer on an inner surface and an outer surface of the container body by coating the inner surface and the outer surface of the container body with a synthetic resin comprising a synthetic resin emulsion or a water-soluble resin in which an aqueous solvent can be used, wherein the step of forming the synthetic resin layer further comprises removing the synthetic resin layer, using a laser marker, from at least one portion of at least one of the inner surface and the outer surface of the container body. Since at least a partial area of the inner and outer surfaces of the molded pulp container manufactured by this method functions as a synthetic resin layer-free area through which moisture can evaporate, it is possible to reduce the formation of blisters on the portion of the molded pulp container on which a synthetic resin layer has been formed by a simple and easy method, thereby preventing the deterioration of the outer appearance of the molded pulp container.

### EFFECTS OF THE INVENTION

According to the present invention, it is possible to provide, by a simple and easy method, a molded pulp container configured such that the formation of blisters is reduced on the molded pulp container after heated in a microwave oven, thereby keeping the outer appearance of the molded pulp container good.

### BRIEF DESCRIPTION OF THE DRAWINGS

Fig. 1 is a vertical sectional view of a molded pulp container according to a first embodiment of the present invention.
Figs. 2A to 2C are schematic diagrams illustrating a method for manufacturing the molded pulp container of the first embodiment.
Figs. 3A to 3D are schematic diagrams illustrating a different method for manufacturing the molded pulp container of the first embodiment.
Fig. 4 is a vertical sectional view of a molded pulp container according to a second embodiment of the present invention.
Figs. 5A to 5C are schematic diagrams illustrating a method for manufacturing the molded pulp container of the second embodiment.
Fig. 6A and 6B are schematic diagrams illustrating a dipping method.

### BEST MODE FOR CARRYING OUT THE INVENTION

The embodiments of the present invention are described below with reference to the drawings. Each drawing illustrates the embodiment of the present invention schematically, and the shown shape, ratio, thickness, etc. may not precisely reflect the contents of the present invention.

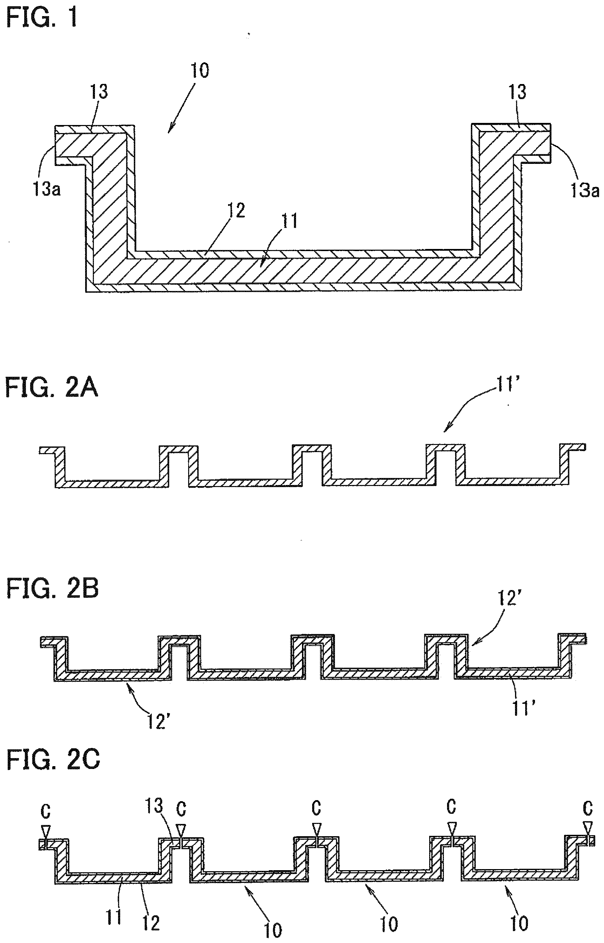

Fig. 1 is a vertical sectional view of a molded pulp container 10 according to the first embodiment of the present invention. As illustrated in Fig. 1, the molded pulp container 10 of the first embodiment includes a molded pulp container body 11 made of a non-wood material obtained from reed or sugarcane, and constituted by a bottom, and a side wall extending upwardly from the bottom. The molded pulp container 10 further includes a synthetic resin layer 12 and a flange 13.

The synthetic resin layer 12 is formed on the entire area of the inner and outer surfaces of the container body 11, except the outer side surface of the flange 13. The synthetic resin layer 12 prevents the moisture of any contents of the molded pulp container 10 that contain moisture, such as food, from infiltrating into the container body 11. The synthetic resin layer 12 also reduces paper dust from the container body 11.

The resin used for the synthetic resin layer 12 is not particularly limited, and may be an acrylic resin, a styrene-acrylic resin, an ethylene-vinyl acetate resin, a styrene-butadiene rubber resin, a polyvinyl alcohol resin, a vinylidene chloride resin, a wax resin, a fluororesin, a silicone resin, or a copolymer or a combination of two or more of these resins. According to the invention, the synthetic resin comprises a synthetic resin emulsion or a water-soluble resin in which an aqueous solvent can be used.

Since the synthetic resin layer 12 is not formed on the outer side surface 13a of the flange 13 of the molded pulp container 10, when the molded pulp container 10 is used as a food (e.g., frozen food) receiving container, and is heated in a microwave oven, the moisture in the container body 11 is discharged as water vapor through the outer side surface 13a. This reduces the formation of blisters on the molded pulp container 10 when heated in a microwave oven. Especially if the molded pulp container 10 is sealed along its flange 13 by a sealant film, blisters formed on the flange 13 of the molded pulp container 10 when heated in a microwave oven could cause the top seal of the container 10 to be opened in an unintended manner, as a result of which its contents may leak out of the container, and a user's hand may get burned by the leaked contents. According to the present invention, it is possible to reduce the formation of such blisters on the flange 13, since the outer side surface 13a of the flange 13 has a portion coated with no synthetic resin (this portion is hereinafter referred to as the "synthetic resin layer-free area 13a").

The synthetic resin layer-free area 13a, which is formed on the flange 13 in this embodiment, preferably accounts for 1 % or more and 10% or less of the surface area of the flange 13. In this case, since most of the surface area of the flange 13 is coated with the synthetic resin layer 12; it is possible to sufficiently reduce the infiltration of moisture of the contents of the container 10 such as food into the container body 11, and also reduce paper dust, while also reducing, in a balanced manner, the formation of blisters, and preventing the deterioration of the outer appearance of the container.

Figs. 2A to 2C schematically illustrate a method for manufacturing a plurality of molded pulp containers 10 according to the first embodiment of the present invention.

First, as illustrated in Fig. 2A, a container body forming member 11' is prepared which comprises at least two container body portions made of molded pulp and continuously connected together at an continuously connecting portion. The number and the arrangement of the container body portions of the container body forming member is not limited provided it comprises a plurality of container body portions. For example, the container body forming member 11' may comprise four container body portions arranged in a single row and each continuously connected to the adjacent container body portion(s), or comprise eight container body portions arranged in four rows and two columns, and each continuously connected to the adjacent container body portions.

The container body forming member 11' can be prepared by a known method for molding pulp. For example, such a method may comprise the steps of preparing a pulp suspension; forming a molded pulp product from the pulp suspension by dipping a mesh mold into the pulp suspension, and lifting it from the pulp suspension; and heating and pressing the thus-obtained molded pulp product into the container body forming member 11' by use of a first press mold disposed under the mesh mold, and a second press mold disposed on the opposite side of the molded pulp product from the first press mold.

The thus-obtained container body forming member 11' comprises a plurality of molded pulp container body portions each including a bottom, a side wall extending upwardly from the bottom, the side wall including a substantially flat flange disposed at the upper end of the side wall. The flanges of each adjacent pair of container body portions are integrally connected together so as to constitute the above-described continuously connecting portion, so that the container body portions are continuously connected together through the continuously connecting portion.

Next, as illustrated in Fig. 2B, a synthetic resin is applied to both the inner and outer surfaces of the container body forming member 11' to form a synthetic resin layer 12' on the inner and outer surfaces thereof. The coating method for forming the synthetic resin layer 12' is not particularly limited, and may be a spray method, a brush coating method, or a dipping method. By forming the synthetic resin layer 12', the container body forming member now comprises molded pulp container portions to be formed into the molded pulp containers 10.

Next, as illustrated in Fig. 2C, the container body forming member 11' is cut by an appropriate means such as a cutter C, at the centers of the respective continuously connecting portions through which the adjacent molded pulp container portions are continuously connected together, so that the molded pulp container portions are separated from each other into the molded pulp containers 10. At the same time, the outer edges of the flanges at both ends of the container body forming member 11' are also cut by an appropriate means such as the cutter C. As a result thereof, the flange 13 of each molded pulp container 10 has at least one cut surface constituting a synthetic resin layer-free area 13a, i.e., an area free of the synthetic resin layer 12. Molded pulp containers 10 according to the first embodiment of the present invention are thus obtained by the above-described steps.

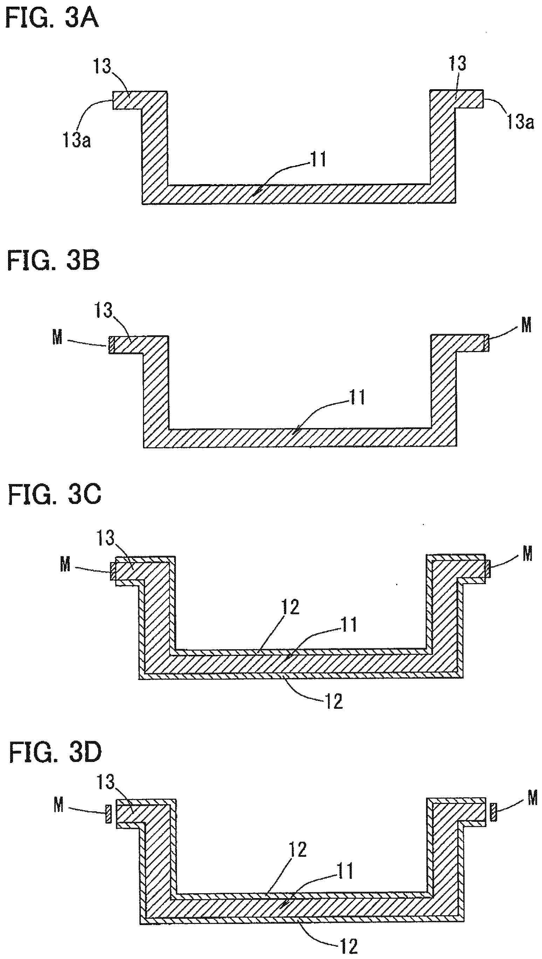

Figs. 3A to 3D schematically illustrate a different method for manufacturing the molded pulp container 10 according to the first embodiment of the present invention.

First, as illustrated in Fig. 3A, a container body 11 made of molded pulp is prepared. The container body 11 can be prepared mainly by either one of the following known methods (1) and (2):
Method (1): The container body 11 is obtained by preparing the above-described container body forming member, which is molded by a known method, and comprises at least two container body portion continuously connected together through the continuously connecting portion, and by cutting it at the continuously connecting portion to separate the at least two container body portions from each other; and
Method (2): The container body 11 is formed independently by a known method.

Next, as illustrated in Figs. 3B and 3C, a synthetic resin layer 12 is formed on the inner and outer surfaces of the container body 11 by coating the inner and outer surfaces of the container body 11 with a synthetic resin. The synthetic resin layer 12 can be formed thereon by a known method. The step of forming the synthetic resin layer 12 further comprises forming a synthetic resin layer-free area (or areas), which is free of the synthetic resin layer 12, on a portion (or portions) of the inner and/or outer surface of the container body (in the example shown, a synthetic resin layer-free area (or areas) is formed on the outer side surface of the flange 13).

The step of forming the synthetic resin layer-free area(s) may comprise, for example, masking, with a masking element or elements M, a portion or portions of the inner and/or outer surfaces of the container body, before forming the synthetic resin layer (in the example shown, portions of the outer side surface of the flange 13 are masked), thereby preventing, when a synthetic resin layer is formed on the container body, the synthetic resin layer from being formed on the area(s) of the container body masked with the masking element(s) M. The masked area(s) becomes the synthetic resin layer-free area(s).

As illustrated in Fig. 3D, by removing the masking element(s) M after forming the synthetic resin layer, the area(s) of the container from which the masking element(s) has been removed (in the example shown, portions of the outer side surface of the flange 13) becomes the synthetic resin layer-free area(s). In this way, the molded pulp container 10 according to the first embodiment of the present invention is obtained.

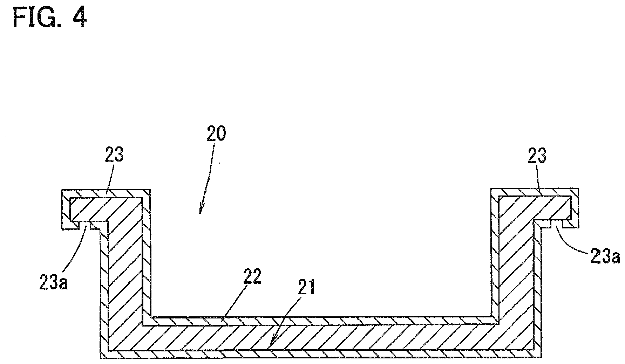

Fig. 4 is a vertical sectional view of a molded pulp container 20 according to the second embodiment of the present invention. As illustrated in Fig. 4, the molded pulp container 20 includes, as with the molded pulp container of the first embodiment of the present invention, a molded pulp container body 21 made of a non-wood material obtained from reed or sugarcane, and constituted by a bottom, and a side wall extending upwardly from the bottom, the side wall including a flange; and a synthetic resin layer 22.

The synthetic resin layer 22 is formed on the entire area of the inner and outer surfaces of the container body 21, except a portion or portions 23a of the downwardly facing surface of the flange 23 that are free of the synthetic resin layer 22 (the portion(s) 23a is hereinafter referred to as the "removed portion(s) 23a"). The removed portion(s) 23a functions as a synthetic resin layer-free area(s) 23a of the molded pulp container 20. Since, as with the molded pulp container 10 of the first embodiment of the present invention, the water vapor generated in the molded pulp container 20 when heated in a microwave oven is discharged through the synthetic resin layer-free area(s) 23a, it is possible to reduce the formation of blisters on the molded pulp container 20 when heated in a microwave oven. Especially if the molded pulp container 20 is sealed along its flange 23 by a sealant film, blisters formed on the flange 23 of the molded pulp container 20 when heated in a microwave oven could cause the top seal of the container 20 to be opened in an unintended manner, as a result of which its contents may leak out of the container, and a user's hand may get burned by the leaked contents. According to the present invention, it is possible to reduce the formation of such blisters on the flange 23, since the downwardly facing surface of the flange 23 includes a synthetic resin layer-free area (or areas) 23a.

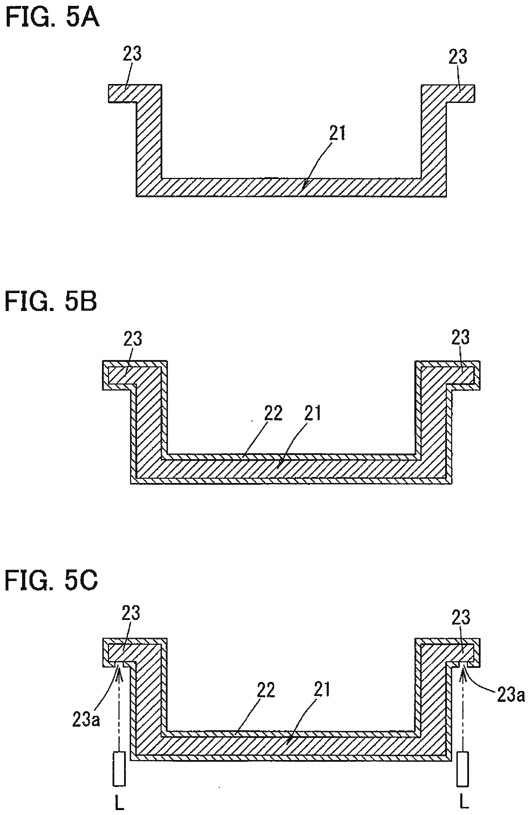

Figs. 5A to 5C schematically illustrate a method for manufacturing the molded pulp container 20 according to the second embodiment of the present invention.

First, as illustrated in Fig. 5A, a container body 21 made of molded pulp is prepared. As described above, the container body 21 may be one of container bodies separated from each other by cutting a container body forming member, or may be formed independently by molding pulp.

Next, as illustrated in Fig. 5B, a synthetic resin layer 22 is formed on the inner and outer surfaces of the container body 21 by coating the inner and outer surfaces of the container body 21 with a synthetic resin. Any of the above-described methods can be used to form the synthetic resin layer 22. The step of forming the synthetic resin layer 22 further comprises, as illustrated in Fig. 5C, forming a synthetic resin layer-free area (or areas) 23a on a portion or portions of the inner and/or outer surface of the container body (in the example shown, synthetic resin layer-free areas are formed on portions of the downwardly facing surface of the flange 23). The step of forming the synthetic resin layer-free area(s) comprises removing the synthetic resin layer from a portion (or portions) of the inner and/or outer surface of the container body (in the example shown, from portions of the downwardly facing surfaces of the flanges 23), by, for example, a laser marker L.

### EXAMPLES

The contents of the present invention are further clarified below by comparing Examples 1 to 3 and Comparative Example 1. The inventor of the present invention prepared molded pulp containers for Examples 1 to 3 and Comparative Example 1 as described below.

### <Example 1>

A container body forming member was prepared which comprises a plurality of continuously connected container body portions made of molded pulp and each constituted by a bottom, and a side wall extending upwardly from the bottom, the side wall including a flange disposed on the upper end of the side wall, and having a substantially flat shape over the entire circumference of the flange. The adjacent container body portions were formed with the opposed flanges continuously connected together. The size of each container body portion was set as follows:
Container body: length 20 cm (including the flange) X width 15 cm (including the flange) X height 5 cm
Container body's receiving portion: length 17.5 cm X width 12.5 cm X height 5 cm
Flange's width: 1.5 cm (including the connecting portion)
Container body portion's sectional thickness: about 1 mm

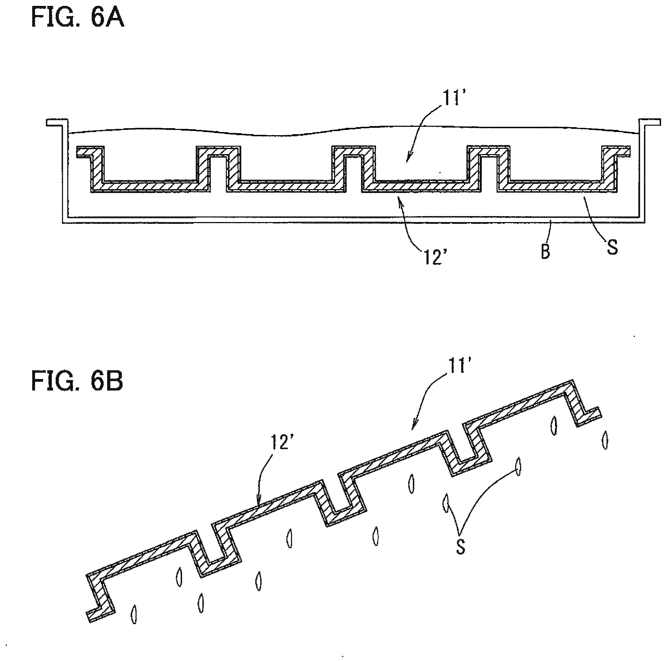

Next, the inner and outer surfaces of the container body forming member 11' were coated with a synthetic resin by a dipping method, i.e., by, as illustrated in Fig. 6A, dipping the whole of the container body forming member 11' into a coating solution bath B containing a synthetic resin solution S, and pulling it up out of the coating solution bath B, so that a synthetic resin layer was formed on the inner and outer surfaces thereof. As illustrated in Fig. 6B, the surplus synthetic resin solution S which had adhered to the container body forming member 11' was removed by inclining, at an appropriate angle, the container body forming member 11' after pulled up out of the synthetic resin solution S. As the synthetic resin solution used herein, a synthetic resin diluted with water was used, the synthetic resin being made by SAIDEN CHEMICAL INDUSTRY, and being called "saibinorl EK-61" (styrene-acrylic copolymer (acrylic resin component: 55% by mass, styrene resin component: 45% by mass), solid content concentration: 40% by mass). The synthetic resin layer after dried had a thickness of about 60 µm.

Thereafter, the container body forming member on which the synthetic resin layer had been formed was cut, at the center (continuously connecting portion) of the opposed flanges (on each adjacent pair of container body portions) through which the opposed flanges had been continuously connected, into molded pulp containers separated from each other. Each of the separated molded pulp containers had no synthetic resin layer on the cut outer side surface portions of the flange corresponding to the cut continuously connecting portions. The molded pulp container of Example 1 according to the present invention is one of the molded pulp containers obtained by the above steps.

### <Example 2>

A container body forming member identical to that of Example 1 was prepared, which comprises a plurality of container body portions made of molded pulp and continuously connected together. Unlike Example 1, before forming a synthetic resin layer on the container body forming member, the container body forming member was cut, at its continuously connecting portions, into container bodies separated from each other (one of the separated container bodies was used in the following steps). Next, after attaching a commercially available masking tape having a width of 1 cm to the outer side surface of the flange of the container body such that the masking tape would be vertically folded at its widthwise center line over the entire circumference of the flange, the inner and outer surfaces of the container body were coated with a synthetic resin by a dipping method, i.e., by dipping the whole of the container body into a coating solution bath containing a synthetic resin solution, and pulling it up out of the coating solution bath, so that a synthetic resin layer was on the inner and outer surfaces thereof. In this way, a molded pulp container including a synthetic resin layer was obtained. The synthetic resin solution and the thickness of the synthetic resin layer after dried in Example 2 were identical to those in Example 1. Thereafter, by removing the masking tape from the molded pulp container, a synthetic resin layer-free area was formed on the molded pulp container. The molded pulp container of Example 2 according to the present invention was obtained by the above steps.

### <Example 3>

A container body forming member identical to that of Example 1 was prepared, which comprises a plurality of container body portions made of molded pulp and continuously connected together. Unlike Example 1, before forming a synthetic resin layer on the container body forming member, the container body forming member was cut, at its continuously connecting portions, into container bodies separated from each other (one of the separated container bodies was used in the following steps). Next, the inner and outer surfaces of the container body were coated with a synthetic resin by a dipping method, i.e., by dipping the whole of the container body into a coating solution bath containing a synthetic resin solution, and pulling it up out of the coating solution bath, so that a synthetic resin layer was formed on the inner and outer surfaces thereof. In this way, a molded pulp container including a synthetic resin layer was obtained. The synthetic resin solution and the thickness of the synthetic resin layer after dried in Example 3 were identical to those in Example 1. Thereafter, by removing, with a commercially available laser marker, the synthetic resin layer from a partial area of the downwardly facing surface of the flange of the molded pulp container, a synthetic resin layer-free area was formed on the above partial area of the flange. The molded pulp container of Example 3 according to the present invention was obtained by the above steps.

### <Comparative Example 1>

A container body forming member identical to that of Example 1 was prepared, which comprises a plurality of container body portions made of molded pulp and continuously connected together. Unlike Example 1, before forming a synthetic resin layer on the container body forming member, the container body forming member was cut, at its continuously connecting portions, into container bodies separated from each other (one of the separated container bodies was used in the following step). Next, the inner and outer surfaces of the container body were coated with a synthetic resin by a dipping method, i.e., by dipping the whole of the container body into a coating solution bath containing a synthetic resin solution, and pulling it up out of the coating solution bath, so that a synthetic resin layer was formed on the inner and outer surfaces thereof. In this way, a molded pulp container including a synthetic resin layer was obtained. The synthetic resin solution and the thickness of the synthetic resin layer after dried in Comparative Example 1 were identical to those in Example 1. The molded pulp container of Comparative Example 1, which includes a synthetic resin layer on the entire surface of the container body, and thus does not include a synthetic resin layer-free area, was obtained by the above steps.

After pouring, in the molded pulp container of each of Examples 1 to 3 and Comparative Example 1, water accounting for 70% of the maximum receiving capacity of the container, a sealant film (Mitsui Chemicals Tohcello, Inc., product name: ABF-65C, film thickness: 30 pm) was cut into the size of length 20 cm X width 15 cm, and the molded pulp container was sealed by the sealant film (top seal) with the flanges of the container completely covered by the top seal. Thereafter, the sealed molded pulp container of each of Examples 1 to 3 and Comparative Example 1 was kept in a freezer, and frozen until the water in the container completely changed into ice. Thereafter, the molded pulp container thereof after frozen was taken out of the freezer, and was heated for 5 minutes and 20 seconds in a microwave oven (manufactured by TOSHIBA, model No. ER-C7) with an output of 600 watts. By observing the respective molded pulp containers of Examples 1 to 3 and Comparative Example 1 after heating them, the molded pulp container(s) in which no blisters were formed on the flange, and of which the outer appearance did not deteriorate was (were) evaluated as [O]; and the molded pulp container(s) in which blisters were formed on the flange, and of which the outer appearance deteriorated was (were) evaluated as [X]. This result is shown in Table 1. As can be seen from Table 1, for all of the molded pulp containers of Examples 1 to 3, when the containers are heated, e.g., in a microwave, it is possible to prevent or reduce the formation of blisters, thereby preventing the deterioration of the outer appearances of the containers.

**<Table 1>**

| | Evaluation |
|---|---|
| Example 1 | O |
| Example 2 | O |
| Example 3 | O |
| Comparative Example 1 | X |

The above-described embodiments and Examples are merely examples in every respect, and the present invention is not limited to the above embodiments and Examples. The scope of the present invention is indicated by the claims, and should be understood to include all modifications and variations within the scope of the claims.

### DESCRIPTION OF REFERENCE NUMERALS

10: molded pulp container of the first embodiment
11: container body
12: synthetic resin layer
13: flange
13a: flange's outer side surface (synthetic resin layer-free area)
20: molded pulp container of the second embodiment
21: container body
22: synthetic resin layer
23: flange
23a: removed portion (synthetic resin layer-free area)
11': container body forming member
12': synthetic resin layer
C: cutter
M: masking element
L: laser marker
S: synthetic resin solution
B: coating solution bath

## Claims

1. A molded pulp container (10) comprising:
a container body (11) made of molded pulp; and
a synthetic resin layer (12) formed by coating an inner surface and an outer surface of the container body (11) with a synthetic resin comprising a synthetic resin emulsion or a water-soluble resin in which an aqueous solvent can be used;
wherein at least one of the inner surface and the outer surface of the container body (11) has at least one synthetic resin layer-free area (13a) which is free of the synthetic resin layer (12);
wherein the container body (11) includes at least a bottom; and a side wall extending upwardly from the bottom;
wherein the side wall includes, at an upper end of the side wall, a substantially flat flange (13), and
wherein the synthetic resin layer-free area (13a) is disposed on a portion of the flange (13).

2. The molded pulp container according to claim 1, wherein the synthetic resin layer-free area (13a) is disposed on an outer side surface of the flange (13).

3. The molded pulp container according to claim 2, wherein a surface area of the synthetic resin layer-free area (13a) is 1% or more and 10% or less of a surface area of the flange (13).

4. A method for manufacturing a molded pulp container according to any one of claims 1 to 3, the method comprising the steps of:
preparing a container body forming member (11') comprising a plurality of container body portions made of molded pulp and connected together at at least one connecting portion;
coating an inner surface and an outer surface of the container body forming member (11') with a synthetic resin comprising a synthetic resin emulsion or a water-soluble resin in which an aqueous solvent can be used so as to form a synthetic resin layer (12') on the inner surface and the outer surface of the container body forming member (11'); and
cutting, at the at least one connecting portion, the container body forming member (11') so as to separate the plurality of molded pulp container body portions from each other.

5. A method for manufacturing a molded pulp container (10) according to any one of claims 1 to 3, the method comprising the steps of:
preparing a container body (11) made of molded pulp; and
forming a synthetic resin layer (12) on an inner surface and an outer surface of the container body (11) by coating the inner surface and the outer surface of the container body (11) with a synthetic resin comprising a synthetic resin emulsion or a water-soluble resin in which an aqueous solvent can be used,
wherein the step of forming the synthetic resin layer (12) further comprises masking, with a masking element or elements (M), at least one portion of at least one of the inner surface and the outer surface of the container body (11) so as to form a synthetic resin layer-free area (13a) which is free of the synthetic resin layer (12), on the at least one portion.

6. A method for manufacturing a molded pulp container (10) according to any one of claims 1 to 3, the method comprising the steps of:
preparing a container body (11) made of molded pulp; and
forming a synthetic resin layer (12) on an inner surface and an outer surface of the container body (11) by coating the inner surface and the outer surface of the container body (11) with a synthetic resin comprising a synthetic resin emulsion or a water-soluble resin in which an aqueous solvent can be used,
wherein the step of forming the synthetic resin layer (12) further comprises removing the synthetic resin layer (12), using a laser marker (L), from at least one portion of at least one of the inner surface and the outer surface of the container body (11).

## Patentansprüche

1. Faserformbehälter (10), umfassend:
einen Behälterkörper (11), der als Faserformteil hergestellt ist; und
eine Kunstharzschicht (12), die durch Beschichten einer Innenfläche und einer Außenfläche des Behälterkörpers (11) mit einem Kunstharz gebildet ist, das eine Kunstharzemulsion oder ein wasserlösliches Harz umfasst, in welchem ein wässriges Lösemittel verwendet werden kann;
wobei die Innenfläche und/oder die Außenfläche des Behälterkörpers (11) mindestens eine Kunstharzschicht-freie Fläche (13a) aufweist, die frei von der Kunstharzschicht (12) ist;
wobei der Behälterkörper (11) mindestens einen Boden umfasst; und eine Seitenwand, die sich von dem Boden nach oben erstreckt;
wobei die Seitenwand an einem oberen Ende der Seitenwand einen im Wesentlichen flachen Flansch (13) umfasst, und
wobei die Kunstharzschicht-freie Fläche (13a) an einem Abschnitt des Flanschs (13) angeordnet ist.

2. Der Faserformbehälter nach Anspruch 1, wobei die Kunstharzschicht-freie Fläche (13a) an einer Außenseitenfläche des Flanschs (13) angeordnet ist.

3. Der Faserformbehälter nach Anspruch 2, wobei eine Oberflächenfläche der Kunstharzschicht-freien Fläche (13a) 1 % oder mehr und 10 % oder weniger einer Oberflächenfläche des Flanschs (13) beträgt.

4. Verfahren zur Herstellung eines Faserformbehälters nach einem der Ansprüche 1 bis 3, wobei das Verfahren die Schritte umfasst:
Bereitstellen eines Behälterkörper-Bildungselements (11'), das eine Vielzahl von Behälterkörperabschnitten umfasst, die als Faserformteil hergestellt sind und an mindestens einem Verbindungsabschnitt miteinander verbunden sind;
Beschichten einer Innenfläche und einer Außenfläche des Behälterkörper-Bildungselements (11') mit einem Kunstharz, das eine Kunstharzemulsion oder ein wasserlösliches Harz umfasst, in dem ein wässriges Lösemittel verwendet werden kann, um eine Kunstharzschicht (12') auf der Innenfläche und der Außenfläche des Behälterkörper-Bildungselements (11') zu bilden; und
Schneiden an dem mindestens einen Verbindungsabschnitt des Behälterkörper-Bildungselements (11`), um die Vielzahl der Faserformbehälterkörperabschnitte voneinander zu trennen.

5. Verfahren zur Herstellung eines Faserformbehälters (10) nach einem der Ansprüche 1 bis 3, wobei das Verfahren die Schritte umfasst:
Bereitstellen eines Behälterkörpers (11), der als Faserformteil hergestellt ist; und
Ausbilden einer Kunstharzschicht (12) auf einer Innenfläche und einer Außenfläche des Behälterkörpers (11) durch Beschichten der Innenfläche und der Außenfläche des Behälterkörpers (11) mit einem Kunstharz, das eine Kunstharzemulsion oder ein wasserlösliches Harz umfasst, in welchem ein wässriges Lösemittel verwendet werden kann,
wobei der Schritt des Ausbildens der Kunstharzschicht (12) ferner ein Abdecken mindestens eines Abschnitts der Innenfläche und/oder der Außenfläche des Behälterkörpers (11) mit einem Abdeckungselement oder -Elementen (M) umfasst, um an dem mindestens einen Abschnitt eine Kunstharzschicht-freie Fläche (13a) zu bilden, die frei von der Kunstharzschicht (12) ist.

6. Verfahren zur Herstellung eines Faserformbehälters (10) nach einem der Ansprüche 1 bis 3, wobei das Verfahren die Schritte umfasst:
Bereitstellen eines Behälterkörpers (11), der als Faserformteil hergestellt ist; und
Ausbilden einer Kunstharzschicht (12) auf einer Innenfläche und einer Außenfläche des Behälterkörpers (11) durch Beschichten der Innenfläche und der Außenfläche des Behälterkörpers (11) mit einem Kunstharz, das eine Kunstharzemulsion oder ein wasserlösliches Harz umfasst, in welchem ein wässriges Lösemittel verwendet werden kann,
wobei der Schritt des Ausbildens der Kunstharzschicht (12) ferner ein Entfernen der Kunstharzschicht (12) von mindestens einem Abschnitt der Innenfläche und/oder der Außenfläche des Behälterkörpers (11) unter Verwendung eines Laserbeschrifters (L) umfasst.

## Revendications

1. Récipient en pâte moulée (10) comprenant :
un corps de récipient (11) fait de pâte moulée ; et
une couche de résine synthétique (12) formée par une enduction d'une surface intérieure et d'une surface extérieure du corps de récipient (11) avec une résine synthétique comprenant une émulsion de résine synthétique ou une résine hydrosoluble dans laquelle un solvant aqueux peut être utilisé ;
dans lequel au moins une de la surface intérieure et de la surface extérieure du corps de récipient (11) présente au moins une zone exempte de couche de résine synthétique (13a) qui est exempte de la couche de résine synthétique (12) ;
dans lequel le corps de récipient (11) inclut au moins un fond ; et une paroi latérale s'étendant vers le haut depuis le fond ;
dans lequel la paroi latérale inclut, au niveau d'une extrémité supérieure de la paroi latérale, une bride substantiellement plate (13), et
dans lequel la zone exempte de couche de résine synthétique (13a) est disposée sur une partie de la bride (13).

2. Le récipient en pâte moulée selon la revendication 1, dans lequel la zone exempte de couche de résine synthétique (13a) est disposée sur une surface latérale extérieure de la bride (13).

3. Le récipient en pâte moulée selon la revendication 2, dans lequel la zone de surface de la zone exempte de couche de résine synthétique (13a) est de 1 % ou plus et 10 % ou moins d'une zone de surface de la bride (13).

4. Procédé pour fabriquer un récipient en pâte moulée selon l'une quelconque des revendications 1 à 3, le procédé comprenant les étapes de :
préparation d'un élément de formation de corps de récipient (11') comprenant une pluralité de parties de corps de récipient faites de pâte moulée et jointes ensemble au niveau d'au moins une partie de jointure ;
enduction d'une surface intérieure et d'une surface extérieure de l'élément de formation de corps de conteneur (11') avec une résine synthétique comprenant une émulsion de résine synthétique ou une résine hydrosoluble dans laquelle un solvant aqueux peut être utilisé de sorte à former une couche de résine synthétique (12') sur la surface intérieure et la surface extérieure de l'élément de formation de corps de récipient (11') ; et
découpe, au niveau de l'au moins une partie de jointure, de l'élément de formation de corps de récipient (11') de sorte à séparer la pluralité de parties de corps de récipient en pâte moulée l'une de l'autre.

5. Procédé pour fabriquer un récipient en pâte moulée (10) selon l'une quelconque des revendications 1 à 3, le procédé comprenant les étapes de :
préparation d'un corps de récipient (11) fait de pâte moulée ; et
formation d'une couche de résine synthétique (12) sur une surface intérieure et une surface extérieure du corps de récipient (11) par une enduction de la surface intérieure et de la surface extérieure du corps de récipient (11) avec une résine comprenant une émulsion de résine synthétique ou une résine hydrosoluble dans laquelle un solvant aqueux peut être utilisé,
dans lequel l'étape de formation de la couche de résine synthétique (12) comprend en outre un masquage, avec un ou des éléments de masquage (M), d'au moins une partie d'au moins une de la surface intérieure et de la surface extérieure du corps de récipient (11) de sorte à former une zone exempte de couche de résine synthétique (13a) qui est exempte de la couche de résine synthétique (12), sur l'au moins une partie.

6. Procédé pour fabriquer un récipient en pâte moulée (10) selon l'une quelconque des revendications 1 à 3, le procédé comprenant les étapes de :
préparation d'un corps de récipient (11) fait de pâte moulée ; et
formation d'une couche de résine synthétique (12) sur une surface intérieure et une surface extérieure du corps de récipient (11) par une enduction de la surface intérieure et de la surface extérieure du corps de récipient (11) avec une résine comprenant une émulsion de résine synthétique ou une résine hydrosoluble dans laquelle un solvant aqueux peut être utilisé,
dans lequel l'étape de formation de la couche de résine synthétique (12) comprend en outre une suppression de la couche de résine synthétique (12), en utilisant un marqueur au laser (L), d'au moins une partie d'au moins une de la surface intérieure et de la surface extérieure du corps de récipient (11).
